# EUROPEAN PATENT SPECIFICATION

(11) **EP 4 282 683 B1**
(45) Date of publication and mention of the grant of the patent: **22.05.2024**
(21) Application number: 23173720.6
(22) Date of filing: 16.05.2023
(51) Int. Cl.: B60K 6/48, B60K 6/387, B60K 6/547, B60W 10/06, B60W 10/08, B60W 20/16, B60W 30/188, B60W 20/40, B60L 15/20

(54) **SYSTEM FOR CONTROLLING A HYBRID ELECTRIC VEHICLE**
SYSTEM ZUR STEUERUNG EINES HYBRIDEN ELEKTROFAHRZEUGS
SYSTÈME DE COMMANDE D'UN VÉHICULE ÉLECTRIQUE HYBRIDE

(30) Priority: 26.05.2022 JP 2022086106
(43) Date of publication of application: 29.11.2023
(73) Proprietor: Suzuki Motor Corporation, Hamamatsu-shi, Shizuoka 432-8611 (JP)
(72) Inventor: OTA, Yasuo, Hamamatsu-shi, Shizuoka, 432-8611 (JP)
(74) Representative: Haseltine Lake Kempner LLP

(56) References cited:
- EP-A1- 3 153 368
- EP-A1- 3 604 010
- WO-A1-2012/069580
- US-A1- 2014 081 500

## Description

### TECHNICAL FIELD

The present invention relates to a system for controlling a hybrid electric vehicle.

### BACKGROUND

Hybrid electric vehicles are known, one example being shown in JP2017-105377A (called Patent Literature 1 below). The known hybrid electric vehicle, which is described in JP2017-105377A, has an internal combustion engine and a motor generator (M/G) as power sources, in which M/G can convert between electrical power from a battery and mechanical power. In electric vehicle (EV) mode, it is driven with M/G as the sole power source following stopping or disabling the internal combustion engine.

[Patent Literature 1] JP2017-105377A, [Patent Literature 2] EP 3 604 010 A1

Whether driving a hydraulic electric vehicle in EV mode is continued or discontinued depends on the state of charge in the traction battery useable to power a M/G, but it may be constrained by other factors, e.g., an engine start request. In this situation, the engine drives the vehicle, and the M/G assists the engine by providing additional power, so there is a need for fuel economy savings by reducing the amount of fuel consumed by the engine.

JP2017-105377A contains no description about fuel economy savings, so fails to meet the above-mentioned need EP 3 604 010 A1 discloses a hybrid electric vehicle, and a power system and a power generation control method thereof.

### SUMMARY

Accordingly, the present invention provides a system for improving fuel economy even in the situation that driving a hybrid electric vehicle in EV mode is constrained.

According to one exemplary aspect of the present invention, there is provided a system for controlling a hybrid electric vehicle,
the hybrid electric vehicle having an electric vehicle (EV) mode, in which a motor generator (M/G) provides a propelling power for the vehicle as the sole power source, in addition to a hybrid electric vehicle (HEV) mode, in which the M/G can assist an engine by providing an additional torque,
the system comprising:
   a traction battery storing energy useable to power the M/G, and
   a controller configured to work during driving the vehicle in HEV mode to cause the M/G to act as a motor or as a generator in accordance with an assessment of the SOC of the traction battery, which assessment is made using an unaltered version of a group of SOC ranges, one for torque assist and the other for electrical-generation,
   wherein the controller activates, in response to an anticipated subsequent constraint to driving the vehicle in EV mode, an HEV mode in which the controller causes the M/G to act as a motor or as a generator in accordance with an assessment of the SOC of the traction battery, which assessment is made using an altered version of the group, for assist in correcting the engine operating point of the engine,
   wherein the altered and unaltered versions are the same except that at least one of the SOC ranges of the altered version of the group is in the form of what is selected from a group consisting of:
      a SOC range for electrical-generation that is shortened as compared to its counterpart in the unaltered version, and
      a SOC range for torque-assist that is extended as compared to its counterpart in the unaltered version.

In a further non-limiting embodiment of any of the foregoing systems, the controller uses the SOC range for torque-assist that is extended as compared to its counterpart in the unaltered version for assist in correcting the operating point of the engine.

In a further non-limiting embodiment of any of the foregoing systems, the controller uses the SOC range for electrical-generation that is shortened as compared to its counterpart in the unaltered version.

In a further non-limiting embodiment of any of the foregoing systems, the controller corrects the operating point of the engine so that the engine can run on one of the engine operating points with good thermal efficiency while causing M/G to act as a motor during driving the vehicle in HEV mode.

The embodiments of the preceding paragraphs can improve fuel economy even in the situation that driving a hybrid electric vehicle in EV mode is constrained because the M/G acts as a motor or as a generator in a planned way for assist in correcting the engine operating point in HEV mode activated in response to an anticipated subsequent constraint to driving the vehicle in EV mode, providing a technical solution to solve the technical problem without incurring any appreciable cost increase.

### BRIEF DESCRIPTION OF THE DRAWINGS

FIG. 1 schematically illustrates a hybrid electric vehicle including a controller configured to selectively activate an electric vehicle (EV) mode or a hybrid electric vehicle (HEV) mode.
FIG. 2 schematically illustrates, within the operating range of a traction battery, an exemplary unaltered version of a group of SOC ranges, one for torque-assist, the other for electrical-generation, and an exemplary altered version of the group of the SOC ranges.
FIG. 3 schematically illustrates, within the operating range of the traction battery, another exemplary unaltered version of a group of SOC ranges, one for torque-assist, the other for electrical-generation, and an exemplary altered version of the group of the SOC ranges.
FIG. 4 schematically illustrates, within the operating range of the traction battery, an exemplary unaltered version of a group of SOC ranges like that illustrated in FIG. 3, and an exemplary altered version of the group of the SOC ranges.
FIG. 5 is an exemplary engine operating point map, illustrating a transfer from a current operating point to a new operating point.
FIG. 6 is an exemplary gear shift map for a transmission of the vehicle powertrain.

### DETAILED DESCRIPTION

The figures are not necessarily to scale; some features could be exaggerated or minimized to show details of components. Therefore, specific structural and functional details disclosed herein are not to be interpreted as limiting, but merely as a representative basis for teaching one skilled in the art to variously employ the embodiments. As those of ordinary skill will understand, various features illustrated and described with reference to any one of the figures can be combined with features illustrated in one or more other figures to produce embodiments that are not explicitly illustrated or described.

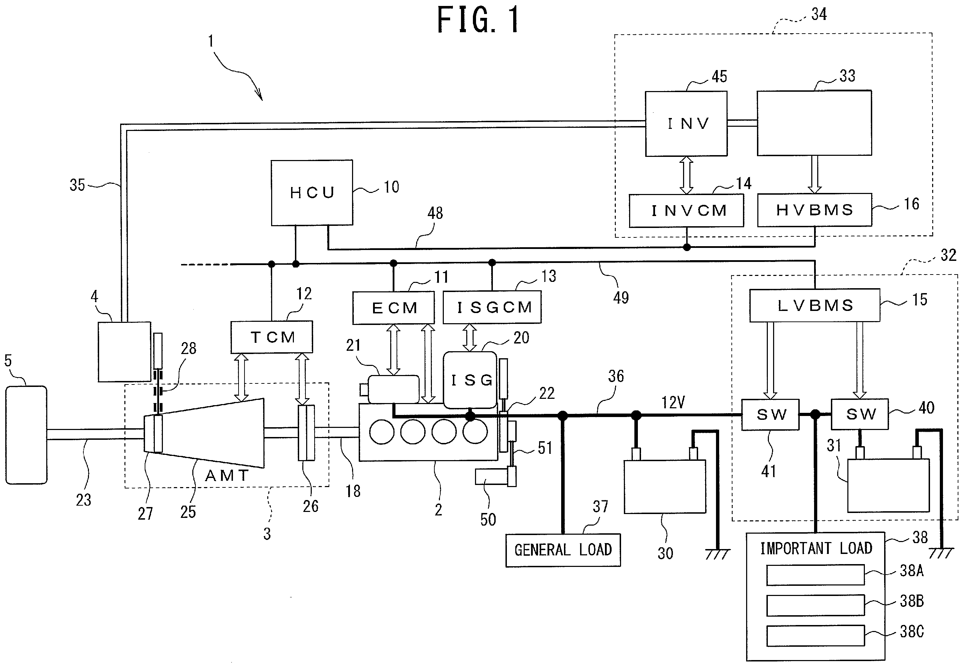

Referring to FIG. 1, a schematic diagram of a hybrid electric vehicle (HEV) 1 is illustrated according to an embodiment of the present invention.

FIG. 1 illustrates representative relationships among the components. Physical placement and orientation of the components within the vehicle 1 may vary.

As shown in FIG. 1, HEV 1 includes a powertrain. The powertrain includes a fuel-powered engine 2 that drives a transmission 3. As will be described in further detail below, the powertrain includes an electric machine such as a motor generator (M/G) 4, a traction battery 33, a disconnect clutch 26, a multiple step-ratio transmission or gearbox 25, and a differential 27. The engine 2 and M/G 4 are both drive sources for HEV 1. The engine 2 represents a power source that may include an internal combustion engine such as a gasoline, diesel, or a natural gas-powered engine, or a fuel cell. The engine 2 generates an engine power and corresponding engine torque that is supplied to M/G 4 and differential 27 via the gearbox 25 when the disconnect clutch 26 between the engine 2 and the gearbox 25 is at least partially engaged. Power electronics, which will be described later, condition direct current (DC) power provided by the traction battery 33 to the requirements of M/G 4. For example, power electronics may provide three phase alternating current (AC) to M/G 4.

The disconnect clutch 26 can be disengaged to isolate the engine 2 from the remainder of the powertrain such that M/G 4 can act as the sole drive source for HEV 1. M/G 4 is continuously driveably connected to the differential 27, whereas the engine 2 is driveably connected to the differential 27 only when the disconnect clutch 26 is at least partially engaged.

As shown in the representative embodiment of FIG. 1, the differential 27 drives a pair of drive wheels, only one being illustrated at 5, via respective axles, only one being illustrated at 23, connected to the differential 27. The differential 27 transmits equal torque to each drive wheel 23 while permitting slight speed differences such as when the vehicle turns a corner. Distinct types of differentials or similar devices may be used to distribute toque from the powertrain to one or more wheels. The powertrain further includes a hybrid control unit (HCU) 10, an engine control module (ECM) 11, a transmission control module (TCM) 12, an integrated starter generator control module (ISGCM) 13, an inverter control module (INVCM) 14, a low voltage battery management system (LVBMS) 15, and a high voltage battery management system (HVBMS) 16. HCU 10 and the associated control modules can be collectively referred to as a "controller" that controls various actuators in response to signals from various sensors to control functions such as starting/stopping the engine 2, operating M/G 4 to provide wheel torque or charge the traction battery 33, select or schedule transmission shifts.

The engine 2 is formed with more than two cylinders, and it is a four-stroke cycle engine, meaning four piston strokes are needed to complete a cycle. The cycle includes four distinct processes: intake, compression, combustion and power, and exhaust.

The engine 2 has a conventional starter 21 in addition to an integrated starter generator (ISG) 20. ISG 20 is driveably connected to the crankshaft 18 of the engine 2 via a belt 22 or the like. ISG 20 acts as a motor to turn the crankshaft 18 to rotationally drive the engine 2. ISG 20 acts as a generator to convert rotational energy provided by the crankshaft 18 into electrical energy.

ISG 20 is controlled by ISGCM 13 to restart the engine 2 as a motor. ISG 20 can act as a motor to assist the engine 2 by providing additional power.

The starter 21 includes a cranking motor and pinion gears, both being not illustrated. The starter 21 provides torque to turn the crankshaft 18 to start the engine 2. The starter 21 starts the engine 2, whereas ISG 20 restarts the engine 2 after the engine shut-down by the stop-start system.

The gearbox 25 may include gear sets (not shown) that are selectively placed in different gear ratios by selective engagement of friction elements such as clutches and brakes (not shown) to establish the desired multiple discrete or step drive ratios. The friction elements are controllable through a shift schedule that connects and disconnects certain elements of the gear sets to control the ratio between a transmission output shaft and a transmission input shaft. The gearbox 25 is automatically shifted from one ratio to another based on various vehicle and ambient operating conditions by an associated controller, such as TCM 12. The gearbox 25 then provides powertrain output torque to the differential 27.

The hydraulically controlled gearbox 25 is but one example of gearboxes. For example, gearbox 25 may be implemented by an automated manual transmission (AMT) that includes one or more servo motors to translate/rotate shift forks along a shift rail to select a desired gear ratio.

The differential 27 and M/G 4 are interconnected by a power transmission system such as a chain system 28. M/G 4 can operate to act as a motor.

As described, the engine 2 and M/G 4 are both drive sources for HEV 1, so the powertrain of the HEV 1 is a parallel hybrid powertrain. In detail, to drive the HEV 1 with the engine 2, the disconnect clutch 26 is at least partially engaged to transfer at least a portion of the engine torque through the disconnect clutch 26 to the gearbox 25, and then from the gearbox 25 to the differential 27. M/G 4 may assist the engine 2 by providing additional power to turn the differential 27. This operation mode may be referred to as a "hybrid electric vehicle mode" or an "assist mode." To drive the vehicle with M/G 4 as the sole power source, the power flow remains the same except the disconnect clutch 26 isolates the engine 2 from the remainder of the powertrain. Combustion in the engine 2 may be disabled or otherwise OFF during this time to conserve fuel. The engine 2 may be disabled or turned OFF in response to an engine stop request from a controller. The traction battery 33 transmits stored electrical energy to power electronics that include an inverter (INV) 45. INV 45 converts DC voltage from the battery 33 into AC voltage to be used by M/G 4. The controller in the form of HCU 10 commands INV 45 via INVCM 14 to convert voltage from the traction battery 33 to an AC voltage provided to M/G 4 to provide positive or negative torque to the differential 27. This operation mode may be referred to as an "electric only mode" or an "electric vehicle mode."

In any driving mode, M/G 4 may act as a motor and provide a driving force for the powertrain. Alternatively, M/G 4 may act as a generator and convert kinetic energy from the powertrain into electrical energy to be stored in the traction battery 33. M/G 4 may act as a generator while the engine 2 is providing propulsion power for HEV 1. M/G 4 may additionally act as a generator during times of regenerative braking in which rotational energy from spinning drive wheels 5 is transferred back through the differential 27 and is converted into electrical energy for storage in the traction battery 33. The schematic illustrated in FIG. 1 is merely exemplary and is not intended to be limiting. Other configurations are contemplated. For example, M/G 4 may be connected to any place of the powertrain between the engine 2 and drive wheels 5, so M/G 4 do not necessarily need to be connected to the differential 27 via the chain system 28.

HEV 1 includes: the first energy storage device 30; a low-voltage power pack 32 that includes the second energy storage device 31; a high-voltage power pack 34 that includes the third energy storage device in the form of the traction battery 33, a high-voltage cable 35, and a low-voltage cable 36.

The first energy storage device 30, second energy storage device 31, and traction battery 33 may include secondary cells (rechargeable cells). The first energy storage device 30 may include at least one lead-acid battery. The second energy storage device 31 is a higher energy density and higher voltage device as compared to the first energy storage device 30.

The second energy storage device 31 has a shorter charging time as compared to the first energy storage device 30. The second energy storage device 31 may include at least one lithium-ion battery. A lithium-ion battery is but one example of the second storage device 31. A nickel metal hydride battery is acceptable for use.

Each of the first and second energy storage device 30 and 31 may be a low-voltage battery pack which is built using the appropriate number of cells to produce a low voltage of 12V for example. The traction battery 33 may include a lithium-ion battery, for example.

The traction battery 33 may be a high-voltage battery pack which is built using the appropriate number of cells to produce a higher voltage of 100V, for example, as compared to the first and second energy storage devices 30 and 31. HVBMS 16 is included in the high-voltage power pack 34 to control the state of charge (SOC) in the traction battery 33, i.e., a measurement of the amount of energy available in a battery at a specific point in time expressed as a percentage of the level of charge of a battery relative to its capacity (full). The traction battery 33 stores energy useable to power M/G 4. Then, M/G 4 may act as a motor and provide a driving force for the powertrain. The driving mode may be referred to as a "motor mode" or a "power mode." Alternatively, M/G 4 may act as a generator and convert kinetic energy from the powertrain into electrical energy to be stored in the traction battery 33. This operation mode may be referred to as a "generator mode." M/G 4 may act as a generator while the engine 2 is providing propulsion power for the vehicle 1. M/G 4 may additionally act as a generator during times of regenerative braking in which rotational energy from spinning drive wheels 5 is transferred back through the differential 27 and is converted into electrical energy for storage in the traction battery 33.

HEV 1 has electric loads, which may be classified into a category called general load 37 and another category called important load 38 to be protected. Such electric loads do not include the starter 21 and ISG 20.

The category called important load 38 requires a stable power supply and may include an electronic stability control (ESC) 38A that improves a vehicle's stability by detecting and reducing loss of traction (skidding), an electric power steering (EPS) 38B that that assists driver effort in controlling a vehicle's steering to improve directional control, and a headlight 38C. The category called important load 38 may additionally include instrument panel mounted lamps and meters, and an automotive navigation system (not shown).

The category called general load 37 includes electrical loads that are used temporarily, so they do not require a stable power supply as compared to the electrical loads in the category called important load 38. Examples of electrical loads in the category called general load 37 include, for example, wipers and an electric cooling fan that blows cooling air to the engine 2, which are not shown.

The low voltage power pack 32 has switches 40 and 41 and LVBMS 15 in addition to the second energy storage device 31. The first and second energy storage devices 30 and 31 are connected to the starter 21, ISG 20, the electrical load(s) in the category called general load 37, the electrical load(s) in the category called important load 38 via a low voltage cable 36 to power them. The first and second energy storage devices 30 and 31 are connected in parallel to power the electrical load(s) in the category called important load 38.

The switch 40 is provided in the low voltage cable 36 between the second energy storage device 31 and the electrical load(s) in the category called important load 38 to disconnect or connect the conduction path from the second energy storage device 31 to the electrical load(s) in the category called important load 38. The switch 41 is provided in the low voltage cable 36 between the first energy storage device 30 and the electrical load(s) in the category called important load 38 to disconnect or connect the conduction path from the first energy storage device 30 to the electrical load(s) in the category called important load 38.

LVBMS 15 actuates the switches 40 and 41 to control charge or discharge of the second energy storage device 31 and power supply to the electrical load(s) in the category called important load 38. For example, while the engine 2 is shut-down by the stop-start system, LVBMS 15 closes the switch 40 and opens the switch 41 to supply the electrical load(s) in the category called important load 38 with electrical power from the high output and high energy density second energy storage device 31.

To let the engine 2 turn over with the starter 21 or to let the engine 2 turn over with the ISG 20 after it being automatically stopped by the stop-start system, LVBMS 15 closes the switch 40 and opens the switch 41 to supply the starter 21 or ISG 20 with electrical power from the first energy storage device 30. While the switch 40 is closed and the switch 41 is opened, electrical power from the first energy storage device 30 is supplied to power the electrical load(s) in the category called general load 37.

As described, the first energy storage device 30 stores energy useable to power the starter 21 and/or ISG 20. The second energy storage device 31 stores energy useable to power the electrical load(s) in the category called general load 37 and/or the electrical load(s) in the category called important load 38.

LVBMS 15 is programmed to actuate the switches 40 and 41 in a way to use energy stored in the second energy storage device 31 to power the electrical load(s) in the category called important load 38, which require a stable power supply, first despite the fact that the second energy storage device 31 is connectable to not only the electrical load(s) in the important load 38 but also the general load 37.

LVBMS 15 may additionally be programmed to monitor the state of charge (SOC) of each of the first and second energy storage devices 30 and 31, check requirements to enable the electrical load(s) in the general and important loads 37 and 38 to accomplish their missions, and actuate the switches 40 and 41 in another way to use energy stored in the appropriate one of the first and second energy storage devices 30 and 31 to power the electrical load(s) in the important load 38, which requires a stable power supply, first.

The high voltage power pack 34 has, in addition to the traction battery 33, INV 45, INVCM 14, and HVBMS 16. The high voltage power pack 34 is connected to the M/G 4 via a high voltage cable 35.

INVCM 14 controls INV 45. As described before, INV 45 can convert DC voltage from the traction battery 33 into AC voltage to be used by M/G 4 or can convert AC voltage from M/G 4 to DC voltage for storage in the traction battery 33. For example, in assist or motor mode, INVCM 14 enables INV 45 to convert DC voltage from the traction battery 33 to AC voltage to be used by M/G 4 so M/G 4 acts as a motor and provides a driving force for the powertrain.

For example, in generator mode, M/G 4 acts as a generator and converts kinetic energy from the powertrain into electrical energy to be stored in the traction battery 33. AC voltage from M/G 4 is converted into DC voltage to be stored in the traction battery 33.

Each of HCU 10, ECM 11, TCM 12, ISGCM 13, INVCM 14, LVBMS 15 and HVBMS 16 is made of a computer unit that includes a central processing unit (CPU), a random-access memory (RAM), a read only memory (ROM), a flash memory for data backup, input ports, and output ports.

The ROMs of these computer units store programs in addition to various constants and various programs to cause each of the computer units to function as the corresponding one of HCU 10, ECM 11, TCM 12, ISGCM 13, INVCM 14, LVBMS 15 and HVBMS 16.

In other words, each of these computer units is caused to function as one of HCU 10, ECM 11, TCM 12, ISGCM 13, INVCM 14, LVBMS 15 and HVBMS 16 by allowing CPU to execute programs stored in ROM using RAM as working area.

HEV 1 is installed with an in-vehicle local area network (LAN) conforming to standards such as a controller area network (CAN) using CAN communication lines 48 and 49.

Using CAN communication line 48, HCU 10 communicates with INVCM 14 and HVBMS 16 to enable smooth exchange of signals, commands, data, information, and the like among them.

Using CAN communication line 49, HCU 10 communicates with ECM 11, TCM 12, ISGCM 13, and LVBMS 15 to enable smooth exchange of signals, commands, data, information, and the like among them.

As readily seen from the foregoing description, in HEV 1, the engine 2 provides power to turn the drive wheels 5 via the transmission 3. M/G 4 is a type of electric machine that acts as a motor to provide additional power to turn the drive wheels 5. M/G 4 acts as a generator while the engine 2 is providing propulsion power for the HEV 1 to generate electrical energy for storage in the traction battery 33.

The air conditioner compressor 50 is drivingly connected to the crankshaft 18 of the engine 2 by means of a belt 51. The air conditioner compressors 50 is actuated by the power of the engine 2. The engine 2 is required to work to actuate the compressor 50.

HCU 10 issues commands to selectively activate various driving modes. Of course, the various driving modes include EV mode and HEV mode.

In EV mode, HEV 1 is driven with M/G 4 as the sole power source. Combustion in the engine 2 may be disabled or otherwise OFF during this time to conserve fuel. In EV mode, HCU 10 issues commands to INVCM 14 to convert DC voltage from the traction battery 33 to AC voltage applied to M/G 4 to provide a motor torque to meet a driver torque request.

In HEV mode, the vehicle 1 is driven with both the engine 2 and M/G 4 as power sources. In HEV mode, HCU 10 issues commands to the ECM 11 to provide fuel to the engine 2 to provide an engine torque, and it issues commands to INVCM 14 to convert DC voltage from the traction battery 33 to AC voltage that is provided to M/G 4. This causes the M/G 4 to provide a motor torque, assisting the engine 2 to meet a driver torque request.

The predetermined EV-mode requirements include but are not limited to a requirement based on whether the state of charge (SOC) in the traction battery 33 is not less than the threshold for EV mode. They include a requirement based on whether the M/G 4 can provide a motor torque that meets a driver torque request, too.

For example, the above-mentioned anticipated subsequent constraint is based on whether there is issued an engine start request in EV mode to activate the air conditioner compressor 50. In response to the engine start request, the engine 2 turns around. If the engine 2 starts, the requirements for driving the vehicle 1 in EV mode are no longer met. The phrase "constraint to driving the vehicle 1 in EV mode" is herein used to mean the following states:
a state in which continuous driving in EV mode is not possible over a continuous period of operation of the compressor 50, and
another state in which, even though intermittent driving in EV mode is possible during times of on and off operation of the compressor 50, continuous driving in EV mode is not possible.

An anticipated subsequent constraint is based on whether there is issued an engine start request, during driving HEV 1 in EV mode, for activating ISG 20 to protect the first energy storage device 30 at low temperatures. ISG 20 is activated and works to supply the electrical load(s) in the category called general load 37 with electrical power instead of the power supply from the first energy storage device 30. As described before, the first energy storage device 30 is a lead-acid battery. The lead-acid battery has significantly reduced discharge performance at low temperatures. Discharging the first energy storage device 30 at low temperatures results in acceleration of deterioration, so the engine 2 needs to be started to activate ISG 20. Moreover, the first energy storage device 30 is protected because, as the second energy storage device 21 supplies ISG 20 and/or starter 21 with electrical power for engine start-up at low temperatures, the first energy storage device 30 no longer does. The requirements for driving HEV 1 in EV mode are not met as the engine 2 turns around and works to protect the first energy storage device 30 at low temperatures.

The anticipated subsequent constraint is based on whether there is issued an engine start request, during driving HEV 1 in EV mode. Such engine start request is issued for activating the air conditioner compressor 50, or it is issued, in response to the temperature of the first energy storage device 30, for activating the ISG 20 to protect the first energy storage device 30.

In the situation that driving HEV 1 in EV mode is constrained, the controller in the form of HCU 10 causes HEV 1 to drive in HEV mode, in which, in order to assist in correcting the engine operating point of the engine 2, a SOC range for torque-assist is extended and/or SOC range for electrical-generation is shortened. Describing in detail, in HEV mode that is activated in response to an anticipated subsequent constraint to (or with respect to) driving HEV 1 in EV mode, the controller in the form of HCU 10 is configured to cause M/G 4 to act as a motor or as a generator in accordance with an assessment of the state of charge (SOC) of the traction battery 33. The assessment is made using an altered version of a group of SOC ranges.

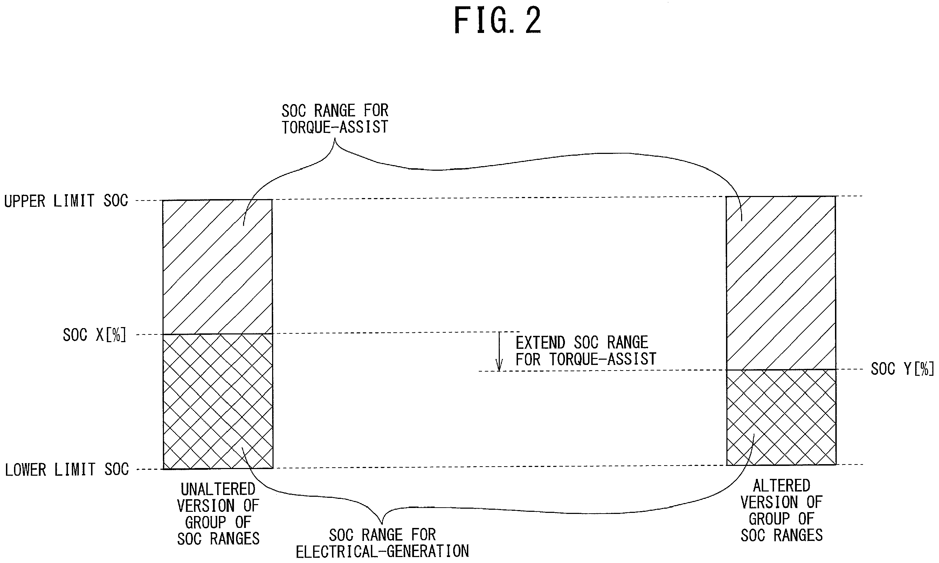

Referring to FIGS 2, 3, and 4, the altered version of the group of SOC ranges (illustrated on the right of FIG. 2 or FIG. 3 or FIG. 4) is illustrated, and the unaltered version of the group of SOC ranges (illustrated on the left of FIG. 2 or FIG. 3 or FIG. 4) is illustrated. Of course, the controller in the form of HCU 10 may perform at least one of an alteration for extending the SOC range for torque-assist and an alteration for shortening the SOC range for electrical-generation.

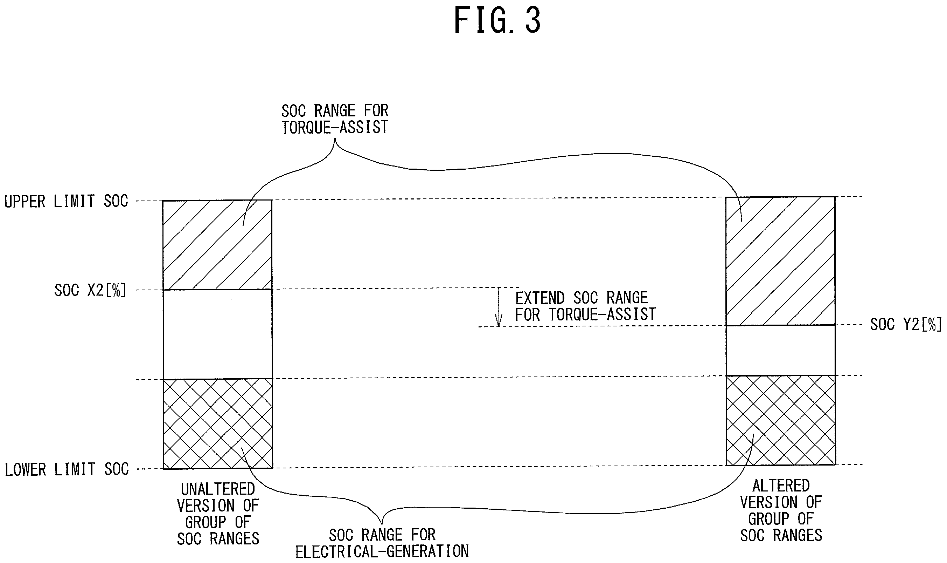

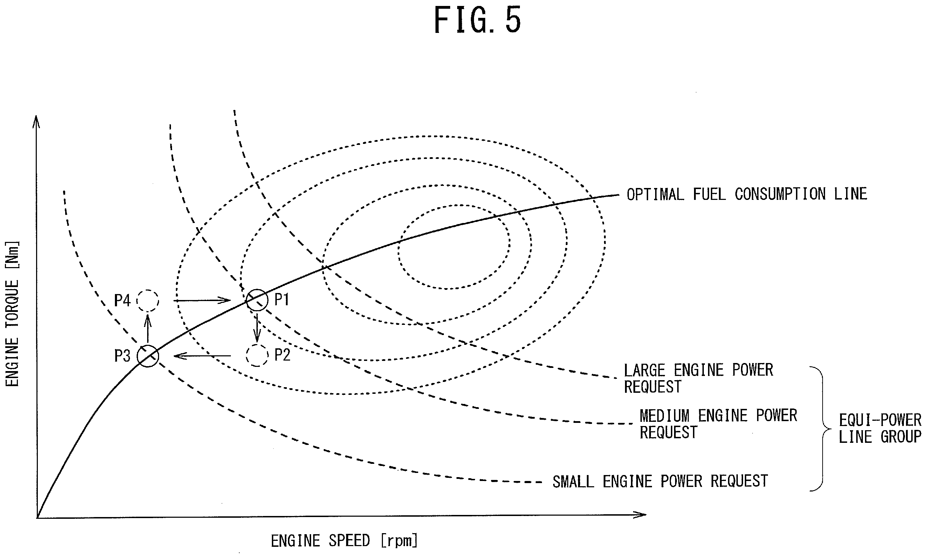

For example, ECM 11 determines whether a constraint with respect to driving HEV 1 in EV mode is likely to happen. If so, it sets up a flag indicative of an anticipated subsequent constraint to driving the vehicle 1 in EV mode and sends a notification about the flag to the controller in the form of HCU 10. In response to the notification, the controller in the form of HCU 10 activates an HEV mode. As illustrated on the right of FIG. 2 or 3, the controller in the form of HCU 10 assesses (or makes an assessment of) the SOC of the traction battery 33 using the altered version of the group of SOC ranges, and it causes M/G 4 to act as a motor or as a generator in accordance with this assessment, for assist in correcting the engine operating point. The engine operating point may be corrected so that the engine 2 can run on the optimum fuel consumption line (see FIG. 5) during driving the HEV 1 in HEV mode.

Moreover, the unaltered and altered versions of the group are within an operating range of the traction battery 33. The operating range has an upper limit SOC and a lower limit SOC. As will be understood as the description proceeds, the SOC range for torque-assist of the unaltered version of the group and that of the altered version of the group have the same upper limit SOC equal to the upper limit SOC of the operating range. The SOC range for electrical-generation of the unaltered version of the group and that of the altered version of the group have the same lower limit SOC equal to the lower limit SOC of the operating range of the traction battery 33.

As will be understood from FIG. 2 or FIG. 3 or FIG. 4 and the following description that the unaltered and altered versions of the group of SOC ranges are the same except that at least one of the SOC ranges of the altered version of the group is in the form of what is selected from a group consisting of a SOC range for torque-assist extended as compared to its counterpart in the unaltered version of the group and a SOC range for electrical-generation shortened as compared to its counterpart in the unaltered version of the group.

FIG. 2 schematically illustrates an example unaltered version of a group of SOC ranges. One of the SOC ranges of the unaltered version of the group is for torque-assist (indicated by a hatched area on the left) and the other is for electrical-generation (indicated by a cross-hatched area on the left). It illustrates an example altered version of the group of SOC ranges, too. One of the SOC ranges of the altered version of the group is for torque-assist (indicated by a hatched area on the right) and the other is for electrical-generation (indicated by a cross-hatched area on the right). In response to the anticipated subsequent constraint to driving the HEV 1 in EV mode, the controller in the form of HCU 10 activates an HEV mode.

In the situation that driving HEV 1 in EV mode is constrained, the controller in the form of HCU 10 causes HEV 1 to drive in HEV mode, in which, to assist in correcting the engine operating point of the engine 2, a SOC range for torque-assist is extended. As escribed before, the traction battery 33 is required to keep powering M/G 4 over a period of driving HEV 1 in EV mode. Hence, an abundant amount of electrical energy remains in the traction battery 33 immediately before activating an HEV mode in response to an anticipated subsequent constraint with respect to driving HEV 1 in EV mode. To reduce the fuel consumption of engine 2 over a period of driving HEV 1 in the HEV mode, the extended SOC range for torque-assist is used to take full advantage of the remaining abundant amount of electrical energy.

The controller in the form of the HCU 10 may store the unaltered version of the group of SOC ranges illustrated on the left of FIG. 2, and the altered version of the group of SOC ranges illustrated on the right of FIG. 2. The controller in the form of HCU 10 selects the altered version of the group during driving in HEV mode in response to an anticipated subsequent constraint to driving in EV mode, but otherwise selects the unaltered version of the group.

If an HEV mode is activated in response to an anticipated subsequent constraint to driving in EV mode, the controller in the form of HCU 10 uses the altered version of the group of SOC ranges illustrated on the right of FIG. 2, but otherwise uses the unaltered version. Using the altered version of the group of SOC ranges, it assesses (or makes an assessment of) the SOC of the traction battery 33 and causes M/G 4 to act as a motor or a generator in accordance with the assessment.

In the schematic of FIG. 2, the vertical axis represents the SOC of the operating range of the traction battery 33. The operating range has an upper limit and a lower limit. An example unaltered version of a group of SOC ranges, one for torque-assist, the other for electrical-generation, is illustrated on the left of FIG. 2, while an example altered version of the group is illustrated on the right of FIG. 2. As indicated by the illustrated hatched area on the right of FIG. 2, the SOC range for torque-assist of the altered version of the group has a lower limit SOC Y that is greater than the lower limit of the operating range. As indicated by the illustrated hatched area on the left of FIG. 2, the SOC range for torque-assist of the unaltered version of the group has a lower limit SOC X that is greater than the lower limit SOC of the operating range. The lower limit SOC X may be the threshold for EV mode. The SOC range for torque-assist of the altered version of the group is extended as compared to its counterpart in the unaltered version of the group as readily seen from the fact that Y < X. As indicated by the cross-hatched area on the right of FIG. 2, the SOC range for electrical-generation of the altered version of the group has an upper limit SOC that is contiguous to the lower limit SOC Y of the SOC range for torque-assist of the same version. As indicated by the cross-hatched area on the left of FIG. 2, the SOC range for electrical-generation of the unaltered version of the group has an upper limit SOC that is contiguous to the lower limit SOC X of the SOC range for torque-assist of the same version. The SOC range for electrical-generation of the altered version of the group is shortened as compared to its counterpart in the unaltered version of the group as readily seen from the fact that Y < X. The SOC range for torque-assist of the unaltered version of the group has a lower limit SOC X, and the SOC range for torque-assist of the altered version of the group is extended because its lower limit SOC Y is less than the lower limit SOC X of the SOC range for torque-assist of the unaltered version. Moreover, the SOC range for electrical-generation of the unaltered version of the group has an upper limit SOC less than but contiguous to the lower limit SOC X of the SOC range for torque-assist of the unaltered version, and the SOC range for electrical-generation of the altered version of the group has an upper limit SOC less than but contiguous to the lower limit SOC Y of the SOC range for torque-assist of the altered version. Thus, the SOC range for electrical-generation of the altered version of the group is shortened because its upper limit SOC is less than the upper limit SOC of its counterpart in the unaltered version.

During driving in HEV mode following an anticipated subsequent constraint to driving in EV mode, the controller in the form of HCU 10 assesses (or makes an assessment of) the SOC of the traction battery 33 using the extended SOC range for torque-assist. It causes M/G 4 to act as a motor or as a generator in accordance with the assessment. Using the extended SOC range for torque-assist leads to an increase in the number of assist events per driving in HEV mode. Using the shortened SOC range for electrical-generation leads to a reduction in the number of generation events with the M/G 4, which is driven by the engine 2, per driving in HEV mode.

FIG. 3 illustrates another exemplary unaltered version of a group of SOC ranges, one for torque-assist, the other for electrical-generation, and an exemplary altered version of the group of the SOC ranges. In HEV mode, HCU 10 may refer to the unaltered and altered version of the SOC ranges as illustrated in FIG. 3.

In FIG. 3, M/G 4 does not act as a motor nor as generator in any one of the SOC ranges for disabling M/G 4 of the unaltered and altered versions of the group of the SOC ranges. In detail, one of the SOC ranges for disabling M/G 4 has an upper limit SOC contiguous to but less than the lower limit SOC X2 of the SOC range for torque-assist of the unaltered version of the group, and it has a lower limit SOC contiguous to but not less than the upper limit SOC of the SOC range for electrical-generation of the unaltered version of the group. The other SOC range for disabling M/G 4 has an upper limit SOC contiguous to but less than the lower limit SOC Y2 of the SOC range for torque-assist of the altered version of the group, and it has a lower limit SOC contiguous to but not less than the upper limit SOC of the SOC range for electrical-generation of the altered version of the group. The upper limit SOC of the SOC range for electrical-generation of the altered version of the group is equal to the upper limit SOC of the SOC range for electrical-generation of the unaltered version of the group, so the SOC range for electrical-generation of the altered version of the group remains the same as its counterpart in the unaltered version of the group. The lower limit SOC Y2 of the SOC range for torque-assist of the altered version of the group is less than the lower limit SOC X2 of the SOC range for torque-assist of the unaltered version of the group, so the SOC range for torque-assist of the altered version of the group is extended as compared to its counterpart in the unaltered version of the group.

During driving HEV 1 in HEV mode following an anticipated subsequent constraint to driving HEV 1 in EV mode, the controller in the form of HCU 10 assesses (or makes an assessment of) the SOC of the traction battery 33 with the extended SOC range for torque-assist of the altered version of the group (see the hatched area on the right of FIG. 3) and causes M/G 4 to act as a motor or as a generator in accordance with an assessment of made with the extended SOC range for torque-assist of the altered version of the group. The extended SOC range for torque-assist of the altered version of the group leads to an increase in the number of assist events with M/G 4, which acts as a motor, per driving HEV 1 in HEV mode.

In the situation that driving HEV 1 in EV mode is constrained, the controller in the form of HCU 10 may control driving HEV 1 in HEV mode by making the use of shortening the SOC range for electricity-generation and correcting the operating point of the engine 2.

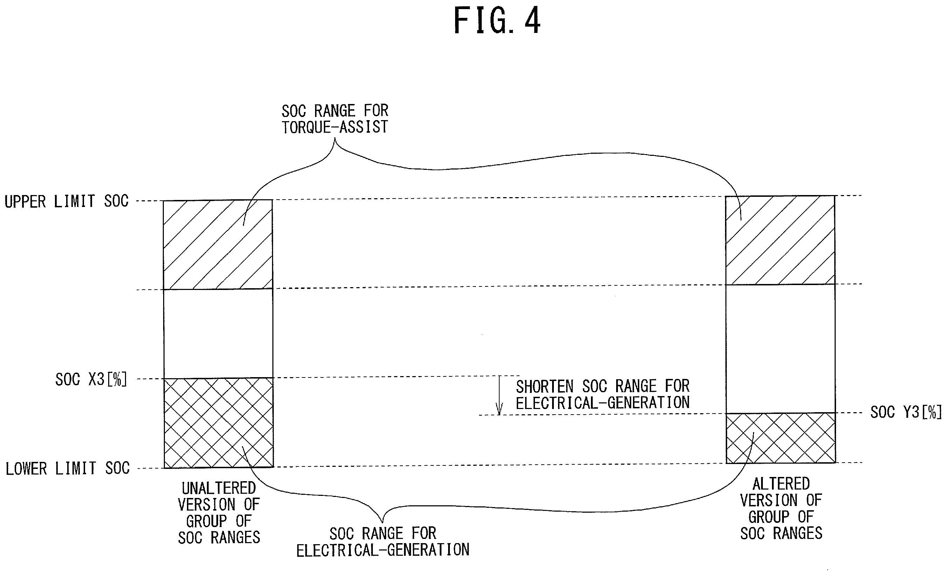

As described before with reference to FIG. 2, one approach is to move the lower limit SOC of the SOC range for torque-assist to Y from X to shorten the SOC range for electrical-generation because the upper limit SOC of the SOC range for electrical-generation is contiguous to the lower limit SOC of the SOC range for torque-assist. Another approach is to move the upper limit SOC of the SOC range for electrical-generation in a direction away from the lower limit SOC of the SOC range for torque-assist in a way to provide and extend a no-action range between the upper and lower limits SOC. This approach is described below with reference to FIG. 4.

FIG. 4 illustrates an exemplary unaltered version of a group of SOC ranges like that illustrated in FIG. 3, and an exemplary altered version of the group of the SOC ranges. In HEV mode, HCU 10 may refer to the unaltered and altered version of the group of the SOC ranges as illustrated in FIG. 4.

In FIG. 4, the SOC range for electrical-generation of the unaltered version of the group has the upper limit SOC X3 that is less than the lower limit SOC of the SOC range for torque-assist of the unaltered version. The upper limit SOC X3 of the SOC range for electrical-generation and the lower limit SOC of the SOC range for torque-assist, each belonging to the unaltered version, define a SOC range for disabling M/G 4. Similarly, the SOC range for electrical-generation of the altered version of the group has the upper limit SOC Y3 that is less than the lower limit SOC of the SOC range for torque-assist of the altered version. The upper limit SOC Y3 of the SOC range for electrical-generation and the lower limit SOC of the SOC range for torque-assist, each belonging to the altered version, define a SOC range for disabling M/G 4. The SOC range for torque-assist of the altered version remains the same as its counterpart in the unaltered version because its lower limit SOC is equal to the lower limit SOC of the SOC range for torque-assist of the unaltered version. The SOC range for electrical-generation of the altered version is shortened because the upper limit SOC Y3 of the SOC range for electrical-generation of the altered version is less than the upper limit SOC (X3) of the SOC range for electrical-generation of the unaltered version.

During driving HEV 1 in HEV mode following an anticipated subsequent constraint to driving HEV 1 in EV mode, the controller in the form of HCU 10 assesses (or makes an assessment of) the SOC of the traction battery 33 using the shortened SOC range for electrical-generation, see the hatched area on the right of FIG. 4, causing M/G 4 to act as a motor or as a generator in accordance with the assessment. The shortened SOC range for electrical-generation of the altered version of the group leads to a reduction in the number of generation events with M/G 4, which is driven by the engine 2, per driving HEV 1 in HEV mode. This contributes to a reduction in the amount of fuel consumed by the engine 2.

In HEV mode, the total powertrain torque is the sum of the engine torque and electric motor torque. Thanks to the use of the extended SOC range for torque-assist in HEV mode that is activated in response the anticipated subsequent constraint, the torque value for the engine 2 may be decreased without any deviation from the total torque level requested. This is because the torque value for M/G 4 may be increased to compensate for a reduction in torque from the engine 2. The torque value for M/G 4 may be determined using an assessment of the SOC of the traction battery 33, which assessment is made using the extended SOC range for torque-assist. For example, the torque value for M/G 4 is maximal if the SOC of the traction battery 33 is the upper limit SOC of the extended SOC range for torque-assist and decreases as the SOC of the traction battery 33 approaches the lower limit SOC Y or Y2 of the extended SOC range for torque-assist (see FIG. 2 and FIG. 3).

The M/G 4 may act as a generator (in generator mode), demanding a load torque, i.e., a certain amount of torque for charging. To compensate for the additional electric load, the engine torque is increased to maintain the same torque level. In HEV mode that is activated in response to an anticipated subsequent constraint to driving HEV 1 in EV mode, the load torque for the engine 2 may be reduced if the SOC of the traction battery 33 is within the shortened SOC range for electrical-generation illustrated by the cross-hatched area on the right of FIG. 2 or FIG. 4.

Hence, the controller in the form of HCU 10 may issue commands to provide a reduced torque value for the engine 2 if the SOC of the traction battery 33 is within the extended SOC range for torque-assist or if the SOC of the traction battery 33 is within the shortened SOC range for electrical-generation.

According to an exemplary aspect, the controller in the form of HCU 10 determines an unaltered version of a group of SOC ranges, one for torque-assist, the other for electrical-generation, and causes M/G 4 to act as a motor to assist the engine 2 if the SOC of the traction battery 33 is within the SOC range for torque-assist and to cause the M/G 4 to act as a generator if the SOC of the traction battery 33 is within the SOC range for electrical-generation. In the situation that driving HEV 1 in EV mode is constrained, the controller in the form HCU 10 controls driving HEV 1 in HEV mode by making use of extending the SOC range for torque-assist, as compared to its counterpart in the unaltered version of the group, and shortening the SOC range for electricity-generation, as compared to its counterpart in the unaltered version of the group.

For example, extending the SOC range for torque-assist brings fuel economy savings because of an increase in the number of assist events with M/G 4 per driving the HEV 1 in HEV mode following an anticipated subsequent constraint to driving HEV 1 in EV mode. M/G 4 may act as a generator during times of regenerative braking in which rotational energy from the spinning wheels 5 is transferred back and is converted into electrical energy for storage in the traction battery 33. Since the number of torque assist events with M/G 4 increases, the consumption of the electrical energy stored in the traction battery 33 is repeatedly performed with M/G 4 during driving HEV 1 in HEV mode following to an anticipated subsequent constraint to driving HEV 1 in EV mode. This may additionally contribute to fuel economy savings.

Extending the SOC range for torque-assist avoids high level of SOC within the traction battery 33, so less likely to limit regenerative braking, because an output from the traction battery 33 is increased depending on an increase in the number of assist events with M/G 4 per driving HEV 1 in HEV mode following an anticipated subsequent constraint to driving the HEV 1 in EV mode. Hence, the frequency of use of frictional braking may become less.

Extending the SOC range for torque-assist provides an efficient way of consuming the electrical energy stored in the traction battery 33 during times of regenerative braking because of an increase in the number of torque assist events with M/G 4 per driving HEV 1 in HEV mode.

As described before, in the situation that driving the vehicle 1 in EV mode is constrained, HCU 10 controls driving HEV 1 in HEV mode by making the use of shortening the SOC range for electricity-generation and correcting the operating point of the engine 2.

Shortening the SOC range for electrical-generation brings additional fuel economy savings because of a reduction in the number of generation events with M/G 4 per driving HEV 1 in HEV mode following an anticipated subsequent constraint to driving HEV 1 in EV mode. M/G 4 acts as a generator, demanding a certain amount of torque for charging. To compensate for the additional electric load, the engine torque needs to be increased to maintain the same crankshaft torque level. The reduction in the number of generation events with M/G 4 reduces the total fuel consumption for the engine 2.

Shortening the SOC range for electrical-generation avoids high level of SOC within the traction battery 33, so less likely to limit regenerative braking, because an input to the traction battery 33 is reduced depending on a reduction in the number of generation events with the M/G 4 per driving HEV 1 in HEV mode following an anticipated subsequent constraint to driving the vehicle 1 in EV mode. Hence, the frequency of use of frictional braking may become less.

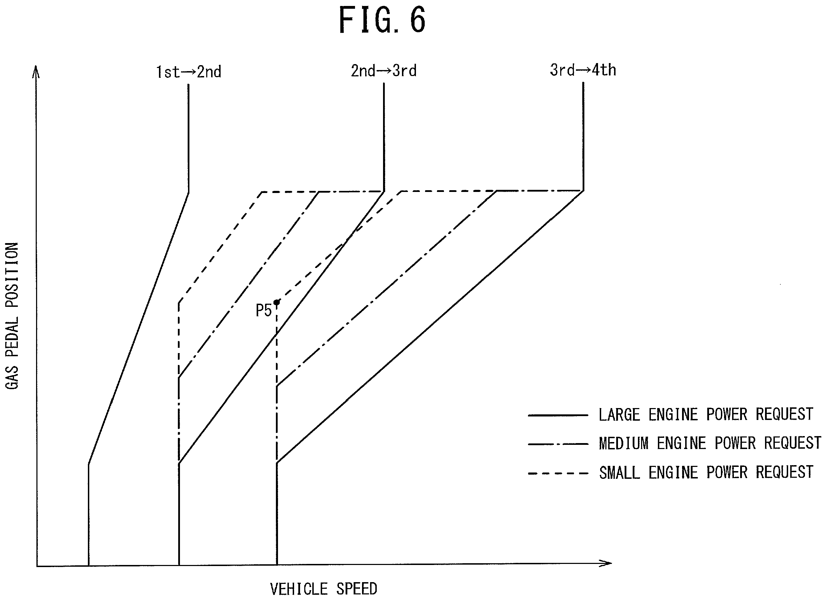

Referring to FIG. 5 and FIG. 6, the strategy of correcting the operating point of the engine 2 in cooperation with a vehicle transmission downshift or upshift in the transmission 3 is described while driving HEV 1 in EV mode is constrained.

In the event of using the extended SOC range for torque-assist, HCU 10 may correct the operating point of the engine 2 so that the engine 2 can run at an efficient operating point while driving HEV 1 in HEV mode. In the event of using the shortened SOC range for electrical-generation, HCU 10 may correct the operating point of the engine 2 so that the engine 2 can run at an efficient operating point while driving HEV 1 in HEV mode.

The controller in the form of HCU 10 has an exemplary engine operating point map shown in FIG. 5 stored in its ROM. The engine operating point map shows operating points of the engine 2, at each of which the engine 2 can meet an engine power request by providing an engine torque with optimal thermal efficiency. Such operating points are experimentally predetermined.

As shown in FIG. 5, the engine operating point map shows equi-power line group, and an optimal fuel consumption line that interconnects points, at each of which the engine 2 can provide an engine torque with good engine thermal efficiency. Shown in FIG. 5 are three equi-power lines representing a large amount of engine power request, a medium amount of engine power request, and a small amount of engine power request, respectively. In the engine operating point map, the equi-power line transfers upward to the upper right as the engine power request increases, and downward to the lower left as the engine power request decreases.

HCU 10 calculates all points of intersection between the optimum fuel consumption line and the equi-power line group as the engine operating points for the engine 2, and controls the engine operating point so that the engine 2 will run on selected one of the engine operating points by operating the engine 2 to provide the engine speed and engine torque which indicate the position of the selected engine operating point.

The controller in the form of HCU 10 has an example automatic gearbox shift map shown in FIG. 6 stored in its ROM. Illustrated in the automatic gearbox shift map are: 1) a gear upshifting schedule for large engine power request (solid line); 2) a gear upshifting schedule for medium engine power request (one-dot chain line), and 3) a gear upshifting schedule for small engine power request (dashed line).

HCU 10 retrieves the gearbox shift map with gas pedal position, vehicle speed and engine power request to find a gear shift point to perform an upshifting or downshifting.

With the SOC range for torque-assist fully extended, if a torque value for M/G 4 is increased, a torque value for the engine 2 must be reduced to compensate for an increase of the torque value for M/G 4 to maintain the total powertrain torque that must fulfill the driver torque request. With reference to the engine operating point map of FIG. 5, the engine operating point shifts from P1 to P2 to reduce the torque value for the engine 2. The engine thermal efficiency at the engine operating point P2 is low. Because the engine thermal efficiency is high at the engine operating point P3 which is on the optimal fuel consumption line, the engine operating point should directly shift from P1 to P3 along the optimal fuel consumption line.

HCU 10 causes the gear in the transmission 3 to change into a higher gear to mitigate a drop in engine speed during a shift of the engine operating point from P1 to P3. Referring to the gearbox shift map of FIG. 6, HCU 10 causes a change between the gear upshifting schedules from the gear upshifting schedule for medium engine power request to the gear upshifting schedule for small engine power request, causing 3-4 upshifting to change into a higher gear to reduce the transmission ratio.

With the SOC range for electrical-generation shortened, the electrical generation area is reduced so a torque value for the engine 2 is reduced because of a reduction in engine load caused by a reduction in electric load for generating a motor torque (electrical generation torque). HCU 10 takes the same control strategy as used with the SOC range for torque-assist fully extended and causes the gear in the transmission 5 to change into a higher gear to reduce the transmission ratio so that the engine operating point can directly shift from P1 to P3 along the optimal fuel consumption line by causing 3-4 upshifting.

With the SOC range for torque-assist shortened from its fully extended state, if a torque value for M/G 4 is reduced, a torque value for the engine 2 must be increased to compensate for a reduction in torque value for M/G 4 to maintain the total powertrain torque that must fulfill the driver torque request. With reference to the engine operating point map of FIG. 5, the engine operating point shifts from P3 to P4 to increase the torque value for the engine 2. The engine thermal efficiency at the engine operating point P4 is low. Because the engine thermal efficiency is high at the engine operating point P1 which is on the optimal fuel consumption line, the engine operating point should directly shift from P3 to P1 along the optimal fuel consumption line.

HCU 10 causes the gear in the transmission 3 to change into a lower gear to mitigate an increase in engine speed during a shift of the engine operating point from P3 to P1. Referring to the gearbox shift map of FIG. 6, the HCU 10 causes a change between the gear upshifting schedules from the gear upshifting schedule for small engine power request to the gear upshifting schedule for medium engine power request, causing 4-3 downshifting to change into a lower gear to increase the transmission ratio.

With the SOC range for electrical-generation, which has been shortened, being reinstated, an increase in engine load caused by an increase in electric load for generating a motor torque (electrical generation torque) requires an increase of the torque value for the engine 2. HCU 10 takes the same control strategy as used with the SOC range for torque-assist, which has been extended, being reinstated and causes a change into a lower gear to increase the transmission ratio so that the engine operating point can directly shift from P3 to P1 along the optimal fuel consumption line by causing 4-3 downshifting.

The schematic of FIG. 5 exaggerates the amount of the shift from P1 to P3 and the amount of the shift from P3 to P 1.

The transmission 3 is not limited to the AMT and may be a multi-stage automatic transmission using planetary gears or a continuously variable transmission (CVT) using pulleys interconnected by a V-belt. The CVT may be used as the transmission 3 if need arises to continuously change between transmission ratios.

As described above, in the event of using the shortened SOC range for electrical-generation, HCU 10 may correct the operating point of the engine 2 so that the engine 2 can run at an efficient operating point while driving HEV 1 in HEV mode. M/G 4 acts as a motor or as a generator in accordance with an assessment of the SOC of the traction battery 33, which assessment is made using the extended SOC range for torque-assist, for assist in correcting the operating point of the engine 2 during driving HEV 1 in HEV mode so that the engine 2 can run on the thermally efficient operating points.

Since the engine 2 runs on the thermally efficient operating points during driving HEV 1 with the extended SOC range for torque-assist in HEV mode, the system efficiency improves.

In the event of using the shortened SOC range for electrical-generation in HEV mode, HCU 10 may correct the operating point of the engine 2 so that the engine can run on one of the engine operating points with good thermal efficiency while driving HEV 1 in HEV mode.

Since the engine 2 runs on the thermally efficient operating points during driving the HEV 1 in HEV mode, the system efficiency improves.

While exemplary embodiments are described above, it is not intended that these embodiments describe all forms encompassed by the claims. The words used in the specification are words of description rather than limitation, and it is to be understood that various changes can be made without departing from the scope of the present invention as defined in the appended claims.

### [List of Reference Numerals]

1 ... Hybrid Electric Vehicle (HEV); 2 ... Engine; 4 ... Motor Generator (M/G); 10 ... Hybrid Control Unit (HCU), and 33 ... Traction Battery:

## Claims

1. A system for controlling a hybrid electric vehicle (1),
the hybrid electric vehicle (1) having an electric vehicle (EV) mode, in which a motor generator (M/G) (4) provides a propelling power for the vehicle as the sole power source, in addition to a hybrid electric vehicle (HEV) mode, in which the M/G (4) can assist an engine (2) by providing an additional torque,
the system comprising:
a traction battery (33) storing energy useable to power the M/G (4), and
a controller configured to work during driving the vehicle (1) in HEV mode to cause the M/G (4) to act as a motor or as a generator in accordance with an assessment of the SOC of the traction battery (33), which assessment is made using an unaltered version of a group of SOC ranges, one for torque assist and the other for electrical-generation,
the system being **characterized in that**
the controller activates, in response to an anticipated subsequent constraint to driving the vehicle (1) in EV mode, an HEV mode in which the controller causes the M/G (4) to act as a motor or as a generator in accordance with an assessment of the SOC of the traction battery (33), which assessment is made using an altered version of the group, for assist in correcting the engine operating point of the engine (2),
wherein the altered and unaltered versions are the same except that at least one of the SOC ranges of the altered version of the group is in the form of what is selected from a group consisting of:
a SOC range for electrical-generation that is shortened as compared to its counterpart in the unaltered version, and
a SOC range for torque-assist that is extended as compared to its counterpart in the unaltered version.

2. The system as claimed in claim 1, wherein:
the controller uses the SOC range for torque-assist that is extended as compared to its counterpart in the unaltered version for assist in correcting the operating point of the engine (2).

3. The system as claimed in claim 2, wherein:
the controller corrects the operating point of the engine (2) so that the engine (2) can run on one of the engine operating points with good thermal efficiency while causing the M/G (4) to act as a motor during driving the vehicle in HEV mode.

4. The system as claimed in claim 1, wherein:
the controller uses the SOC range for electrical-generation that is shortened as compared to its counterpart in the unaltered version.

5. The system as claimed in claim 4, wherein:
the controller corrects the operating point of the engine (2) so that the engine (2) can run on one of the engine operating points with good thermal efficiency while causing the M/G (4) to act as a motor during driving the vehicle in HEV mode.

## Patentansprüche

1. System zur Steuerung eines hybriden Elektrofahrzeugs (1), wobei das hybride Elektrofahrzeug (1) einen Elektrofahrzeug(electric vehicle - EV)-Modus, in dem ein Motor/Generator (M/G) (4) als einzige Leistungsquelle eine Antriebsleistung für das Fahrzeug bereitstellt, sowie einen hybriden Elektrofahrzeug(HEV)-Modus, in dem der M/G (4) einen Verbrennungsmotor (2) durch Bereitstellen eines zusätzlichen Drehmoments unterstützen kann, aufweist,
wobei das System Folgendes umfasst:
eine Traktionsbatterie (33), die Energie speichert, die zum Versorgen des M/G (4) mit Leistung verwendbar ist, und
eine Steuerung, die dazu konfiguriert ist, während des Fahrens des Fahrzeugs (1) im HEV-Modus zu arbeiten, um zu bewirken, dass der M/G (4) gemäß einer Bewertung des SOC der Traktionsbatterie (33) als Motor oder als Generator fungiert, wobei die Bewertung unter Verwendung einer unveränderten Version einer Gruppe von SOC-Bereichen, einen für Drehmomentunterstützung und den anderen für elektrische Erzeugung, vorgenommen wird,
wobei das System **dadurch gekennzeichnet ist, dass** die Steuerung als Reaktion auf eine voraussichtliche nachfolgende Einschränkung des Fahrens des Fahrzeugs (1) im EV-Modus einen HEV-Modus aktiviert, in dem die Steuerung bewirkt, dass der M/G (4) gemäß einer Bewertung des SOC der Traktionsbatterie (33) als Motor oder als Generator fungiert, wobei die Bewertung unter Verwendung einer geänderten Version der Gruppe vorgenommen wird, um eine Korrektur des Verbrennungsmotorbetriebspunkts des Verbrennungsmotors (2) zu unterstützen,
wobei die veränderte und die unveränderten Version dieselben sind, mit der Ausnahme, dass mindestens einer der SOC-Bereiche der veränderten Version der Gruppe eine Form aufweist, die aus einer Gruppe ausgewählt ist, die aus Folgendem besteht:
einem SOC-Bereich für elektrische Erzeugung, der gegenüber seinem Gegenstück in der unveränderten Version verkürzt ist, und einen SOC-Bereich für Drehmomentunterstützung, der gegenüber seinem Gegenstück in der unveränderten Ausführung erweitert ist.

2. System nach Anspruch 1, wobei:
die Steuerung den SOC-Bereich für Drehmomentunterstützung, der gegenüber seinem Gegenstück in der unveränderten Version erweitert ist, zur Unterstützung der Korrektur des Betriebspunkts des Verbrennungsmotors (2) verwendet.

3. System nach Anspruch 2, wobei:
die Steuerung den Betriebspunkt des Verbrennungsmotors (2) derart korrigiert, dass der Verbrennungsmotor (2) bei einem der Verbrennungsmotorbetriebspunkte mit gutem thermischen Wirkungsgrad laufen kann, während der M/G (4) während des Fahrens des Fahrzeugs im HEV-Modus als Motor fungiert.

4. System nach Anspruch 1, wobei:
die Steuerung den SOC-Bereich für elektrische Erzeugung, der gegenüber seinem Gegenstück in der unveränderten Version verkürzt ist, verwendet.

5. System nach Anspruch 4, wobei:
die Steuerung den Betriebspunkt des Verbrennungsmotors (2) derart korrigiert, dass der Verbrennungsmotor (2) bei einem der Verbrennungsmotorbetriebspunkte mit gutem thermischen Wirkungsgrad laufen kann, während der M/G (4) während des Fahrens des Fahrzeugs im HEV-Modus als Motor fungiert.

## Revendications

1. Système de commande d'un véhicule électrique hybride (1),
le véhicule électrique hybride (1) ayant un mode de véhicule électrique (EV), dans lequel un groupe convertisseur (M/G) (4) fournit une puissance de propulsion au véhicule comme seule source d'énergie, en plus d'un mode de véhicule électrique hybride (HEV), dans lequel le M/G (4) peut assister un moteur (2) en fournissant un couple supplémentaire,
le système comprenant :
une batterie de traction (33) stockant de l'énergie utilisable pour alimenter le M/G (4), et
un dispositif de commande configuré pour fonctionner pendant la conduite du véhicule (1) en mode HEV pour amener le M/G (4) à agir comme moteur ou comme générateur conformément à une évaluation du SOC de la batterie de traction (33), laquelle évaluation est réalisée à partir d'une version non modifiée d'un groupe de plages SOC, l'une pour l'assistance au couple et l'autre pour la génération d'électricité,
le système étant **caractérisé en ce que** le dispositif de commande active, en réponse à une contrainte ultérieure anticipée de conduite du véhicule (1) en mode EV, un mode HEV dans lequel le dispositif de commande amène le M/G (4) à agir comme un moteur ou comme un générateur conformément à une évaluation du SOC de la batterie de traction (33), laquelle évaluation est effectuée à l'aide d'une version modifiée du groupe, pour aider à corriger le point de fonctionnement moteur du moteur (2),
dans lequel les versions modifiées et non modifiées sont les mêmes, sauf qu'au moins une des plages SOC de la version modifiée du groupe se présente sous la forme d'un élément sélectionné dans un groupe constitué des plages suivantes :
une plage SOC pour la production électrique qui est raccourcie par rapport à son homologue dans la version non modifiée, et
une plage SOC pour l'assistance au couple qui est étendue par rapport à son homologue dans la version non modifiée.

2. Système selon la revendication 1, dans lequel :
le dispositif de commande utilise la plage SOC pour l'assistance au couple qui est étendue par rapport à son homologue dans la version non modifiée pour aider à corriger le point de fonctionnement du moteur (2).

3. Système selon la revendication 2, dans lequel :
le dispositif de commande corrige le point de fonctionnement du moteur (2) de sorte que le moteur (2) puisse fonctionner sur l'un des points de fonctionnement du moteur avec une bonne efficacité thermique tout en amenant le M/G (4) à agir comme un moteur pendant la conduite du véhicule en mode HEV.

4. Système selon la revendication 1, dans lequel :
le dispositif de commande utilise la plage SOC pour la génération d'électricité qui est raccourcie par rapport à son homologue dans la version non modifiée.

5. Système selon la revendication 4, dans lequel :
le dispositif de commande corrige le point de fonctionnement du moteur (2) de sorte que le moteur (2) puisse fonctionner sur l'un des points de fonctionnement du moteur avec une bonne efficacité thermique tout en amenant le M/G (4) à agir comme un moteur pendant la conduite du véhicule en mode HEV.
